# DEMANDE DE BREVET EUROPEEN

(11) **EP 4 682 055 A1**
(43) Date de publication de la demande: **21.01.2026**
(21) Numéro de dépôt: 25190074.2
(22) Date de dépôt: 17.07.2025
(51) Int. Cl.: B64D 27/40

(54) **MÂT RÉACTEUR COMPORTANT UNE STRUCTURE PRIMAIRE ET UNE STRUCTURE SECONDAIRE AVANT AVEC DES MOYENS DE FIXATION DE L'UNE À L'AUTRE**

(30) Priorité: 19.07.2024 FR 2407982
(71) Demandeur: Airbus Operations (S.A.S.), 31060 Toulouse Cedex 9 (FR)
(72) Inventeur: ROBIGLIO, Thomas, 31060 Toulouse (FR); PUECH, Jacky, 31060 Toulouse (FR); CRUAUD-PRIEUR, Solène, 31060 Toulouse (FR); FIRMIGNAC, Thomas, 31300 Toulouse (FR); POUSSOU, Fabien, 31060 Toulouse (FR); NENY, Jérôme, 31060 Toulouse (FR)
(74) Mandataire: Cabinet Le Guen Maillet

(57) **Abrégé**

L'invention concerne un mât réacteur (100) destiné à supporter un moteur d'un aéronef, ledit mât réacteur (100) comportant une structure primaire (102) qui présente au niveau d'une extrémité avant (102a), une poutre frontale (106), une structure secondaire avant (104) disposée à l'avant de la poutre frontale (106), deux bielles (152a-b), où chacune présente une première extrémité montée articulée à la poutre frontale (106) et une deuxième extrémité montée articulée à la structure secondaire avant (104), et des moyens secondaires de fixation fixés entre un bord avant de la poutre frontale (106) et un bord arrière de la structure secondaire avant (104).

Avec un tel assemblage, l'encombrement est réduit.

## Description

### DOMAINE TECHNIQUE

La présente invention concerne un mât réacteur comportant une structure primaire et une structure secondaire avant fixées l'une à l'autre par des moyens de fixation, un ensemble propulsif comportant un tel mât réacteur et un moteur fixé audit mât réacteur, ainsi qu'un aéronef comportant au moins un tel ensemble propulsif.

### ÉTAT DE LA TECHNIQUE ANTÉRIEURE

Un aéronef comporte classiquement un moteur, par exemple un turboréacteur, qui est fixé sous une aile de l'aéronef à l'aide d'un mât réacteur. Le mât réacteur est constitué d'une structure rigide dite structure primaire, qui est fixée, d'une part, à une structure de l'aile et, d'autre part, à une structure du moteur. Le mât réacteur permet la transmission des efforts générés par le moteur à la structure de l'aile, lorsque le moteur est en marche. Le mât réacteur permet également le passage de systèmes entre l'aile et le moteur, comme par exemple le système électrique, le système hydraulique, pneumatique etc.

À l'avant de la structure primaire, le mât réacteur comporte une structure secondaire avant, qui supporte entre autres, certains capots de la nacelle entourant le moteur. La structure secondaire avant est fixée au-dessus du moteur et à l'avant de la structure primaire à l'aide de différents moyens de fixation comme des systèmes vis-écrous.

Les documents US 2005/11603 et US 8 382 031 divulguent des mâts réacteur de l'état de la technique.

Bien qu'un tel arrangement donne satisfaction, les nacelles sont de plus en grandes et l'espace alloué aux moyens de fixation est d'autant réduit et il est donc nécessaire de trouver un arrangement moins encombrant.

### EXPOSÉ DE L'INVENTION

Un objet de la présente invention est ainsi de proposer un mât réacteur comportant une structure primaire et une structure secondaire avant fixées l'une à l'autre par des moyens de fixation dont l'encombrement est réduit.

À cet effet, est proposé un mât réacteur destiné à supporter un moteur d'un aéronef, ledit mât réacteur comportant :
- une structure primaire qui présente au niveau d'une extrémité avant, une poutre frontale,
- une structure secondaire avant disposée à l'avant de la poutre frontale,
- deux bielles, où chacune présente une première extrémité montée articulée à la poutre frontale et une deuxième extrémité montée articulée à la structure secondaire avant, et
- des moyens secondaires de fixation fixés entre un bord avant de la poutre frontale et un bord arrière de la structure secondaire avant,
le mât réacteur étant caractérisé en ce que les moyens secondaires de fixation sont constitués de deux charnières où chacune présente une première partie fixée à la poutre frontale et une deuxième partie fixée à la structure secondaire avant, où les deux parties sont montées articulées l'une par rapport à l'autre autour d'un axe de charnière et en ce que l'axe de charnière est perpendiculaire à un plan médian vertical du mât réacteur.

Avec un tel assemblage, l'encombrement est réduit.

Avantageusement, l'articulation de chaque extrémité est une rotation dont l'axe est perpendiculaire à un plan médian vertical du mât réacteur.

Avantageusement, le mât réacteur comporte une bielle supplémentaire avec une première extrémité montée articulée à la poutre frontale et une deuxième extrémité montée articulée à la structure secondaire avant.

Avantageusement, la bielle supplémentaire est dans un plan médian vertical du mât réacteur. Avantageusement, le mât réacteur comporte une paroi fixée au voisinage d'un bord arrière de la structure secondaire avant, et, pour chaque bielle, la paroi est percée d'un passage à travers lequel passe ladite bielle.

L'invention propose également un ensemble propulsif comportant un mât réacteur selon l'une des variantes précédentes et un moteur fixé audit mât réacteur.

L'invention propose également un aéronef comportant au moins un ensemble propulsif selon la variante précédente.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une vue de côté d'un ensemble propulsif selon l'invention,
Fig. 3 est une vue en perspective d'un mât réacteur selon un premier mode de réalisation de l'invention,
Fig. 4 est une vue de détail et en perspective d'un mât réacteur,
Fig. 5 est une vue de détail et en perspective d'un mât réacteur selon l'invention, et
Fig. 6 est une vue en coupe d'un système vis-écrou selon un arrangement particulier.

### EXPOSÉ DÉTAILLÉ DE MODES DE RÉALISATION

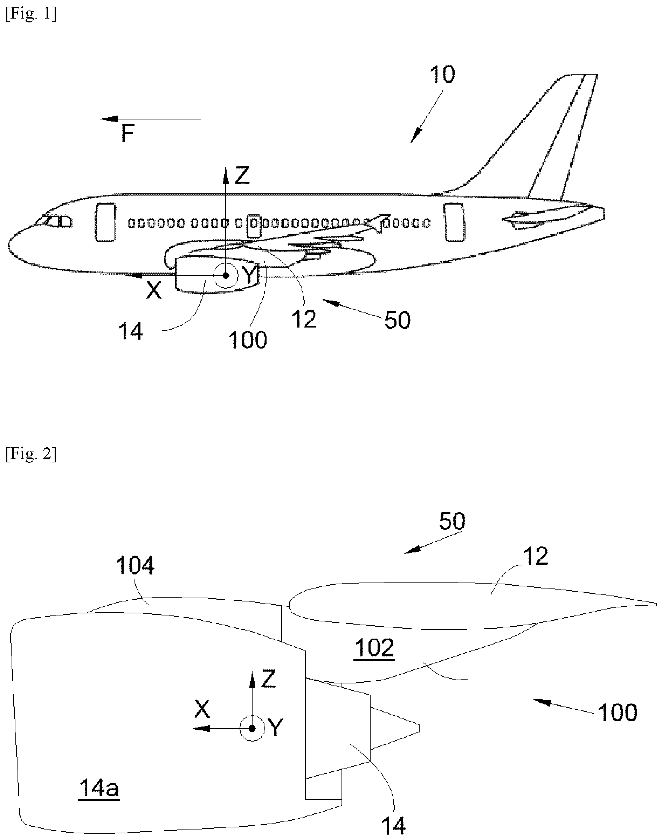

La Fig. 1 montre un aéronef 10 avec au moins un ensemble propulsif 50 fixé sous une aile 12 de l'aéronef 10. Chaque ensemble propulsif 50 comporte un moteur 14, par exemple un turboréacteur, et un mât réacteur 100 selon l'invention fixé sous l'aile 12 et sous lequel est fixé le moteur 14.

Dans la description qui suit, les termes relatifs à une position sont pris en référence à un aéronef 10 en position normale de vol, c'est-à-dire comme il est représenté sur la Fig. 1 et les positions « avant » et « arrière » sont prises par rapport à l'avant et l'arrière du réacteur 100 et par rapport à la direction d'avancement F de l'aéronef 10 lorsque le moteur 14 fonctionne. Dans la description qui suit, et par convention, on appelle X la direction longitudinale du moteur 14 qui est parallèle à l'axe longitudinal dudit turboréacteur, on appelle Y la direction transversale qui est horizontale lorsque l'aéronef 10 est au sol, et Z la direction verticale qui est verticale lorsque l'aéronef 10 est au sol, ces trois directions X, Y et Z étant orthogonales entre elles. Le moteur 14 et le mât réacteur 100 s'étendent le long de la direction longitudinale X et présentent un même plan médian vertical P selon la direction longitudinale X et la direction verticale Z.

La Fig. 2 montre l'aile 12 et le moteur 14 fixés l'un à l'autre par l'intermédiaire du mât réacteur 100. Le mât réacteur 100 comporte une structure primaire 102 qui assure la fixation au moteur 14 et à l'aile 12 et qui porte certains capots d'une nacelle 14a entourant le moteur 14. Le mât réacteur 100 comporte également à l'avant de la structure primaire 102, une structure secondaire avant 104 et qui porte d'autres capots de la nacelle 14a.

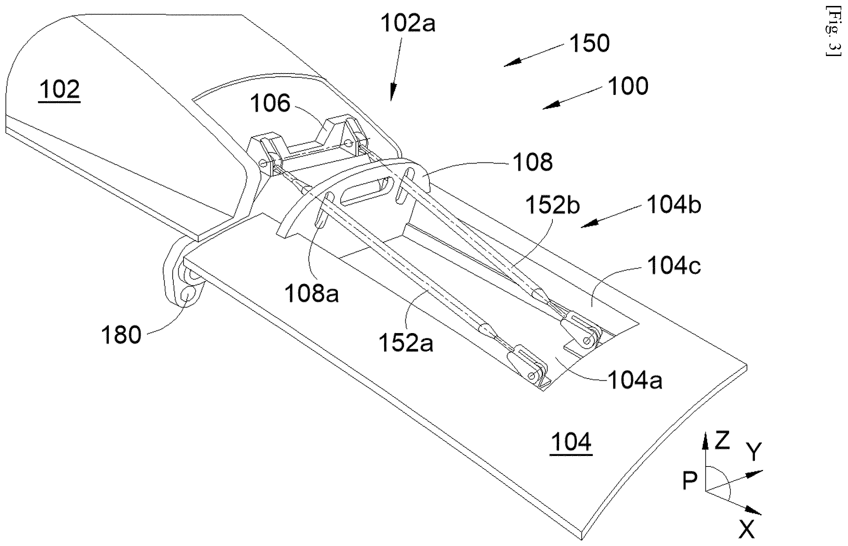

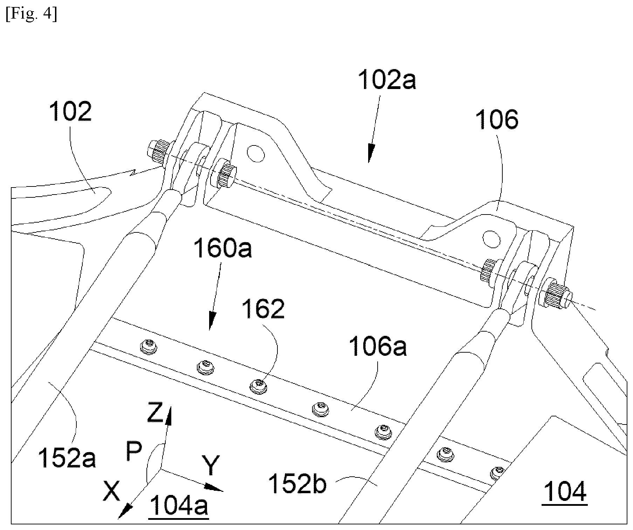

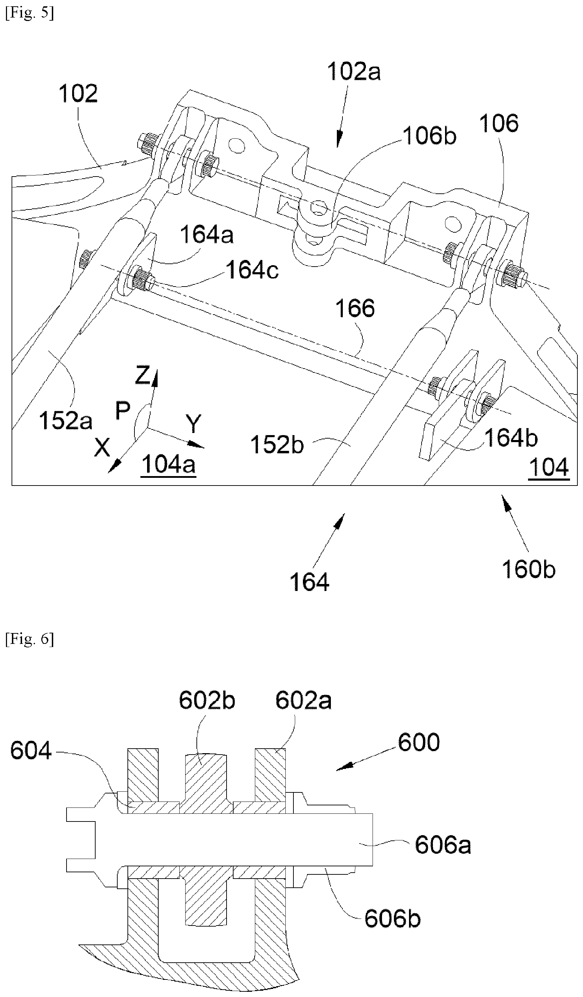

La Fig. 3 et la Fig. 5 montrent le mât réacteur 100 selon l'invention et la Fig. 4 montre un détail d'un autre mât réacteur. La Fig. 3 montre une représentation simplifiée de l'invention où les moyens secondaires de fixation décrits ci-dessous et où la chape femelle décrite ci-dessous ne sont pas représentés.

D'une manière générale, la structure primaire 102 comporte au niveau d'une extrémité avant 102a, une poutre frontale 106. Cette poutre frontale 106 est ici dans un plan globalement perpendiculaire à la direction longitudinale X. La structure secondaire avant 104 est disposée à l'avant de la poutre frontale 106.

La structure secondaire avant 104 est fixée à la structure primaire 102 par l'intermédiaire de moyens de fixation 150.

Les moyens de fixation 150 comportent deux bielles 152a-b qui sont disposées ici de part et d'autre du plan médian vertical P et où chacune s'étend selon une direction globalement parallèle à la direction longitudinale X. Chaque bielle 152a-b présente une première extrémité (une extrémité arrière) qui est montée articulée à la poutre frontale 106 et une deuxième extrémité (une extrémité avant) qui est montée articulée à la structure secondaire avant 104. Dans le mode de réalisation de l'invention représenté ici, chaque deuxième extrémité est fixée au niveau du plancher 104a d'une cuvette 104b de la structure secondaire avant 104.

Les moyens de fixation 150 comportent également des moyens secondaires de fixation 160a-b qui sont arrangés pour fixer un bord avant de la poutre frontale 106 à un bord arrière de la structure secondaire avant 104. Ces moyens secondaires de fixation 160a-b sont différents des bielles 152a-b et viennent donc en complément.

Avec un tel arrangement, les bielles 152a-b permettent une reprise des efforts vers l'avant, et l'espace alloué à la fixation entre la structure primaire 102 et la structure secondaire avant 104, peut être réduit.

En outre, ici, chaque bielle 152a-b prend la forme d'un tendeur dont la longueur peut être réglée par rotation du corps central par rapport aux points d'accrochage aux extrémités, ce qui permet d'ajuster la fixation de la structure primaire 104 lors de son installation.

La fixation de l'extrémité de chaque bielle 152a-b prend ici la forme d'une liaison par chape et d'une manière plus générale, l'articulation de chaque extrémité est une rotation dont l'axe est perpendiculaire au plan médian vertical P.

Sur la Fig. 4, les moyens secondaires de fixation 160a sont constitués d'une pluralité d'éléments de visserie 162, par exemple vis-écrous, où chaque élément de visserie 162 est arrangé pour serrer le bord avant de la poutre frontale 106 et le bord arrière de la structure secondaire avant 104 entre eux, par exemple entre la tête de la vis et l'écrou.

Ici, le bord avant de la poutre frontale 106 présente un rebord 106a qui s'applique contre la structure secondaire avant 104, ici le plancher 104a, et les éléments de visserie 162 traversent successivement le rebord 106a et le plancher 104a. Les éléments de visserie 162 sont ici disposés verticalement.

La mise en place de plusieurs éléments de visserie 162 assure également la sécurité en cas de rupture d'une bielle 152a-b.

Dans le mode de réalisation de l'invention de la Fig. 5, les moyens secondaires de fixation 160b sont constitués de deux charnières 164 qui sont disposées de part et d'autre du plan médian vertical P. Chaque charnière 164 présente une première partie 164a fixée à la poutre frontale 106 et une deuxième partie 164b fixée à la structure secondaire avant 104. Les deux parties 164a-b sont montées articulées l'une par rapport à l'autre autour d'un axe de charnière 166 par l'intermédiaire d'un arbre 164c. Avec un tel arrangement, la fixation de la structure secondaire avant 104 est plus rapide. Ici, la première partie 164a prend la forme d'une chape femelle et la deuxième partie 164b prend la forme d'une chape mâle insérée dans la chape femelle.

L'axe de charnière 166 est commun aux deux charnières 164 et il est perpendiculaire au plan médian vertical P.

Dans ce mode de réalisation, l'équilibrage des forces est assuré par la mise en place d'une bielle supplémentaire (non représentée) qui présente une première extrémité montée articulée à la poutre frontale 106 et une deuxième extrémité montée articulée à la structure secondaire avant 104, en particulier au fond 104a.

La bielle supplémentaire est ici dans le plan médian vertical P et comme précédemment, la fixation de chaque extrémité de la bielle supplémentaire est réalisée par une liaison par chape et plus particulièrement ici, l'articulation de chaque extrémité de la bielle supplémentaire est une rotation dont l'axe est globalement vertical. Sur la Fig. 5, la poutre frontale 106 porte une chape femelle 106b pour réaliser la chape.

La bielle supplémentaire est ainsi entre les bielles 152a-b et est parallèle auxdites bielles 152a-b.

Dans l'invention représenté ici, la poutre frontale 106 porte au niveau de sa partie inférieure des éléments de fixation 180 qui sont arrangés pour être fixés au moteur 14.

Pour renforcer la structure de la structure secondaire avant 104 qui est ici en forme de cuvette 104b, le mât réacteur 100 comporte une paroi 108 qui s'étend dans un plan globalement perpendiculaire à la direction longitudinale X et qui est fixée entre le fond 104 de la cuvette 104b et les rebords 104c à tribord et à bâbord de la cuvette 104b. La fixation est réalisée par exemple par vis ou soudure...

Cette paroi 108 est au voisinage du bord arrière de la structure secondaire avant 104 et elle assure également la fonction de protection en cas de chocs d'oiseau. Pour chaque bielle 152a-b, ceci incluant la bielle supplémentaire, la paroi 108 est percée d'un passage 108a à travers lequel passe ladite bielle 152a-b. Chaque passage 108a prend ici la forme d'un trou oblong dont le grand axe est vertical.

Bien que cette paroi 108 ne soit pas représentée sur la Fig. 5, elle peut être présente.

La Fig. 6 montre un exemple de réalisation d'un montage 600 par chape pouvant être mis en œuvre à chaque extrémité des bielles 152a-b (incluant la bielle supplémentaire) et aux charnières 164.

Le montage 600 comporte une chape femelle 602a constituée de deux murs parallèles entre eux et une chape mâle 602b constituée d'un mur parallèle aux autres murs, et où chaque mur est traversé par un alésage. Un palier 604 est inséré dans l'alésage de chaque mur de la chape femelle 602a en serrant le mur de la chape mâle 602b. Une tige 606a d'une vis traverse les deux paliers 604 et l'alésage du mur de la chape mâle 602b, et un écrou 606b est serré sur la tige 606a pour maintenir les murs et former l'axe de la rotation.

## Revendications

1. Mât réacteur (100) destiné à supporter un moteur (14) d'un aéronef (10), ledit mât réacteur (100) comportant :
- une structure primaire (102) qui présente au niveau d'une extrémité avant (102a), une poutre frontale (106),
- une structure secondaire avant (104) disposée à l'avant de la poutre frontale (106),
- deux bielles (152a-b), où chacune présente une première extrémité montée articulée à la poutre frontale (106) et une deuxième extrémité montée articulée à la structure secondaire avant (104), et
- des moyens secondaires de fixation (160b) fixés entre un bord avant de la poutre frontale (106) et un bord arrière de la structure secondaire avant (104),
le mât réacteur (100) étant **caractérisé en ce que** les moyens secondaires de fixation (160b) sont constitués de deux charnières (164), où chacune présente une première partie (164a) fixée à la poutre frontale (106) et une deuxième partie (164b) fixée à la structure secondaire avant (104), où les deux parties (164a-b) sont montées articulées l'une par rapport à l'autre autour d'un axe de charnière (166), et **en ce que** l'axe de charnière (166) est perpendiculaire à un plan médian vertical (P) du mât réacteur (100).

2. Mât réacteur (100) selon la revendication 1, **caractérisé en ce que** l'articulation de chaque extrémité est une rotation dont l'axe est perpendiculaire à un plan médian vertical (P) du mât réacteur (100).

3. Mât réacteur (100) selon l'une des revendications 1 ou 2, **caractérisé en ce qu'**il comporte une bielle supplémentaire avec une première extrémité montée articulée à la poutre frontale (106) et une deuxième extrémité montée articulée à la structure secondaire avant (104).

4. Mât réacteur (100) selon la revendication 3, **caractérisé en ce que** la bielle supplémentaire est dans un plan médian vertical (P) du mât réacteur (100).

5. Mât réacteur (100) selon l'une des revendications 1 à 4, **caractérisé en ce qu'**il comporte une paroi (108) fixée au voisinage d'un bord arrière de la structure secondaire avant (104), et **en ce que** pour chaque bielle (152a-b), la paroi (108) est percée d'un passage (108a) à travers lequel passe ladite bielle (152a-b).

6. Ensemble propulsif (50) comportant un mât réacteur (100) selon l'une des revendications précédentes et un moteur (14) fixé audit mât réacteur (100).

7. Aéronef (10) comportant au moins un ensemble propulsif (50) selon la revendication 6.
